# EUROPEAN PATENT SPECIFICATION

(11) **EP 2 634 627 B1**
(45) Date of publication and mention of the grant of the patent: **19.04.2017**
(21) Application number: 10842130.6
(22) Date of filing: 28.10.2010
(51) Int. Cl.: G03B 17/56, F16M 11/18, F16M 11/04, F16M 11/20, F16M 11/24

(54) **SUPPORT DEVICE AND LEG DEVICE**
STÜTZVORRICHTUNG UND BEINVORRICHTUNG
DISPOSITIF DE SOUTIEN ET DISPOSITIF DE PIED

(43) Date of publication of application: 04.09.2013
(73) Proprietor: Velbon Kabushiki Kaisha, Tokyo 165-0027 (JP)
(72) Inventor: NAKATANI, Koichiro, Tokyo 161-0035 (JP)
(74) Representative: Brookes Batchellor LLP
(86) International application number: PCT/JP2010/069191
(87) International publication number: WO 2011/083615

(56) References cited:
- WO-A1-01/42706
- JP-A- 2005 163 845
- JP-U- 48 040 835
- JP-U- 54 068 838
- JP-Y1- 31 015 746
- US-A- 2 956 764
- US-A- 6 007 032

## Description

### TECHNICAL FIELD

The present invention relates to a support device that supports a camera and a leg device.

### BACKGROUND ART

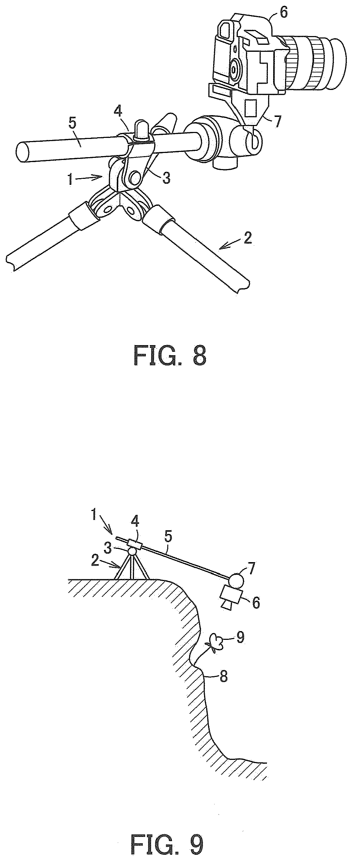

Conventionally, as disclosed in the tripod and camera platform catalogue "GITZO focus on forever" 2009-2010 digest, page 6, there is a leg device that includes the support device 1 shown in Fig. 8 attached to an upper portion of a tripod 2. Specifically, this support device 1 is a leg device formed so that a long support body 5 is held slidably in the longitudinal direction by a movable body 4 supported in such a manner that the angle thereof is adjustable by an angle adjustment mechanism 3 for angle adjustment, and a camera platform 7 of a camera 6 is mounted to the tip end side of the long support body 5.

As shown in Fig. 9, this leg device enables a camera 6 to be set in a desired location and desired direction by the angle adjusting function of the camera platform 7 while the long support body 5 is drawn forward when photographing a subject 9 in a place 8 with which the angle adjusting function of the camera platform 7 cannot respond. The long support body 5 can be erected, and in this case, the long support body 5 functions as a raising and lowering offset center pole.

US 2,956,764 (Koma Nakatani) discloses a camera tripod having a vertically moving rod which can also tilt and move horizontally or at an angle.

### SUMMARY OF INVENTION

### Technical Problem

In the above-described conventional leg device, it is difficult to operate the long support body 5. In particular, as shown in Fig. 9, when a significant portion of the long support body 5 is drawn forward, a photographer who cannot help but stand behind the tripod 2 extends his/ her hand forward through the tripod 2 to grasp the long support body 5 to adjust the angle of the long support body 5, however, fine adjusting operations in such a posture are not easy.

The present invention was made in view of this point, and an object thereof is to provide a support device including a long support body that can be improved in operability, and a leg device using the support device.

### Solution to Problem

Claim 1 of the present invention provides a support device comprising an angle adjustment mechanism for angle adjustment, comprising a turning shaft body that has an axis in the vertical direction and is attached to an upper portion of a leg, a tilting shaft body that has an axis in the horizontal direction and is fitted turnably to the turning shaft body, and a pair of holding bodies that are fitted turnably to the tilting shaft body, a movable body sandwiched and held from the outside by the pair of holding bodies, supported in such a manner that the angle thereof is adjustable with respect to the upper portion of the leg around the turning shaft body, and supported in such a manner that the angle thereof is adjustable with respect to the upper portion of the leg around the tilting shaft body of the angle adjustment mechanism; a long support body that is an axial member held slidably in the longitudinal direction being an axial direction by an inner circumferential surface of the movable body and provided with a supported body mounting portion to which a supported body is mounted on one end of the axial member; and an operation tube for angle adjusting operations fitted onto the long support body from the side opposite to the end of the axial member to which the supported body mounting portion of the long support body is mounted and connected to the movable body.

Claim 2 of the present invention provides a support device including, in the support device according to claim 1, an angle fixation mechanism that fixes the angle adjusting function of the angle adjustment mechanism, where the angle fixation mechanism includes one pressing portion that has a rotating body surface formed integrally with the movable body, the other pressing portion that is fitted movably to the movable body and has a rotating body surface movable in a direction to approach the one pressing portion according to an operation for fixing the angle adjusting function, and a holding body that holds the movable body, and fixes the angle adjustment mechanism when the holding body is compressed and deformed by the rotating body surfaces of the one pressing portion and the other pressing portion.

Claim 3 of the present invention provides a support device in which, in the support device according to claim 2, the operation tube is threadedly fitted and connected to the movable body, and the angle fixation mechanism fixes the angle adjusting function of the angle adjustment mechanism by threadedly advancing the operation tube.

Claim 4 of the present invention provides a support device in which, in the support device according to claim 2 or claim 3, the angle adjustment mechanism includes a turning shaft body to be attached to the upper portion of the leg, a tilting shaft body consisting of a plurality of tilting shaft members fitted turnably to the turning shaft body so as to sandwich the turning shaft body, and a tilting shaft hole portion that is formed to be capable of being reduced in diameter in the holding body by compression by the one pressing portion and the other pressing portion and fitted turnably to the tilting shaft body.

Claim 5 of the present invention provides a support device including, in the support device according to any of claim 1 to claim 4, a rack formed on the long support body, a pinion that is inserted inside through the movable body and made mesh with the rack, and a handle for rotatively operating the pinion.

Claim 6 of the present invention provides a support device including, in the support device according to any of claim 1 to claim 5, a tubular frictional force applying body having a thickness capable of being inserted between the long support body and the movable body from the supported body mounting portion side of the long support body and a thickness incapable of being inserted which are formed across a tapered surface portion, and a frictional force adjusting body that is fitted to the long support body from the supportedbodymountingportion side of the long support body and threadedly fitted to the movable body, and is capable of pressing the frictional force applying body.

Claim 7 of the present invention provides a leg device including a leg and the support device according to any of claim 1 to claim 6 positioned on an upper portion of the leg.

### Advantageous Effects of Invention

According to claim 1 of the invention, even when the position of the supported body mounting portion is changed by sliding the long support body with respect to the movable body whose angle is adjusted by the angle adj ustment mechanism, the operation tube that is fitted onto the long support body from the side opposite to the supported body mounting portion of the long support body and connected to the movable body does not need to be changed in position to be grasped, so that the long support body can be easily adjusted in angle in a desired arbitrary direction with the operation tube via the movable body, and the operability can be improved.

According to claim 2 of the invention, an angle change according to deformation of the holding body occurring when a fixing operation for fixing the angle adjustment mechanism is performed by the angle fixation mechanism is absorbed by the rotating body surfaces of the one pressing portion and the other pressing portion, and the one pressing portion and the other pressing portion approach each other without angle changes, so that an angle change of the long support body at the time of the fixing operation can be prevented, and erroneous operation of the long support body that easily occurs when the angle fixation mechanism performs the fixing operation is prevented, and an accurate operation can be easily realized.

According to claim 3 of the invention, the long support body is adjusted in angle by the angle adjustment mechanism by moving the operation tube, and the operation tube after the angle adjustment is twisted, and accordingly, the angle fixation mechanism is actuated to fix the angle adjusting function of the angle adjustment mechanism, and the angle of the long support body can be easily fixed, so that the operability can be further improved.

According to claim 4 of the invention, by performing the fixing operation for fixing the angle adjustment mechanism by deforming the holding body by compression by the one pressing portion and the other pressing portion, the tilting shaft hole portion of the holding body is reduced in diameter to compress the tilting shaft body, and accordingly, turning around the tilting shaft body can be fixed, and the turning shaft body is also compressed by the tilting shaft body consisting of a plurality of tilting shaft members fitted turnably to the turning shaft body so as to sandwich the turning shaft body, so that turning around the turning shaft body can also be fixed simultaneously, and fixation around the tilting shaft and fixation around the turning shaft can be performed simultaneously, and therefore, the operability is further improved.

According to claim 5 of the invention, the long support body can be easily moved with respect to the movable body by rotating the pinion meshing with the rack by the handle, so that the operability can be improved to be higher than in the case where the long support body is directly grasped and moved in the axial direction.

According to claim 6 of the invention, an appropriate frictional force is applied to the long support body by the frictional force applying body appropriately pressed and adjusted by the frictional force adjusting body threadedly fitted to the movable body, so that the long support body can be smoothly moved while unstable movement due to a clearance or the like between the movable body and the long support body is prevented, and in this regard, the operability is improved.

According to claim 7 of the invention, in the support device positioned on the upper portion of the leg, even when the position of the supported body is changed by sliding the long support body with respect to the movable body, the position to be grasped of the operation tube does not change, so that the long support body can be easily adjusted in angle in a predetermined direction with the operation tube via the movable body, and a leg device with excellent operability can be provided.

### BRIEF DESCRIPTION OF DRAWINGS

Fig. 1 is a perspective view showing an embodiment of a support device according to the present invention.
Fig. 2 is an exploded perspective view of an adapter of the same.
Fig. 3 is a side view showing an embodiment of a leg device having a leg to which the same adapter is attached.
Fig. 4 is a perspective view showing a state where a long support body of the same leg device is tilted.
Fig. 5 (a) is a partially broken-away front view showing a state where the same long support body is adjustable in angle, and Fig. 5(b) is a partially broken-away front view showing a state where an angle adjusting function of the same long support body is fixed.
Fig. 6 (a) is an explanatory view showing an angle fixation mechanism when it allows the same long support body to be adjusted in angle, and Fig. 6 (b) is an explanatory view showing an angle fixation mechanism when it fixes the angle adjusting function of the same long support body.
Fig. 7 is a sectional view showing a comparative example for describing a problem occurring when a fixing operation for fixing the angle adjusting function is performed.
Fig. 8 is a perspective view showing a conventional leg device.
Fig. 9 is a side view showing a usage example of the conventional leg device.

### DESCRIPTION OF EMBODIMENTS

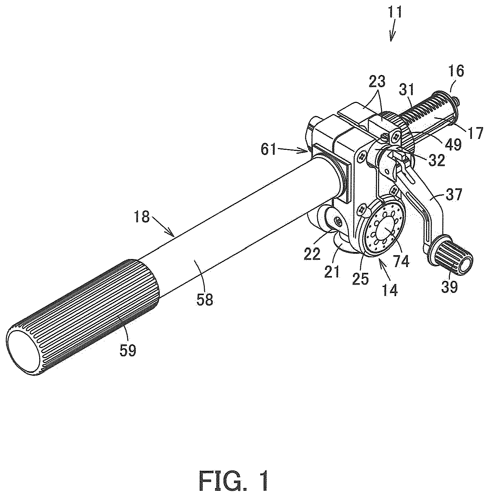

Hereinafter, the present invention is described in detail based on an embodiment shown in Figs. 1 to 6.

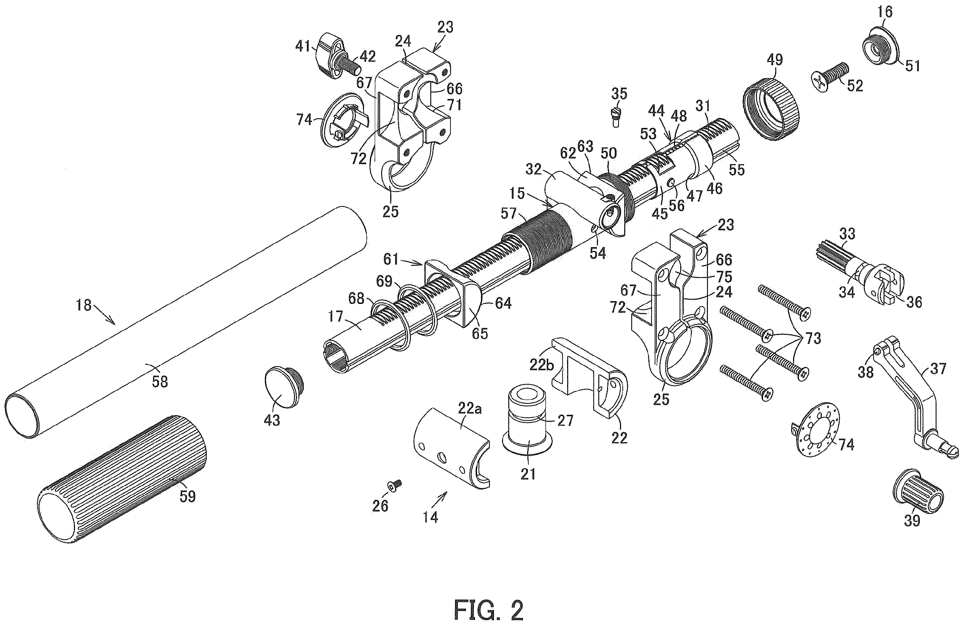

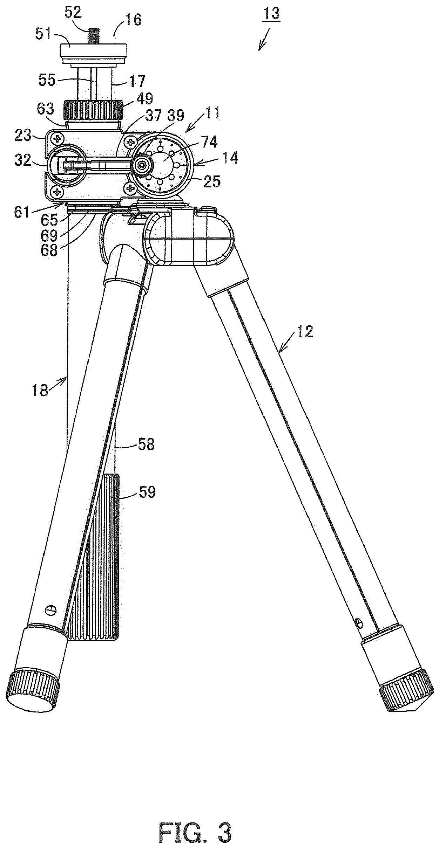

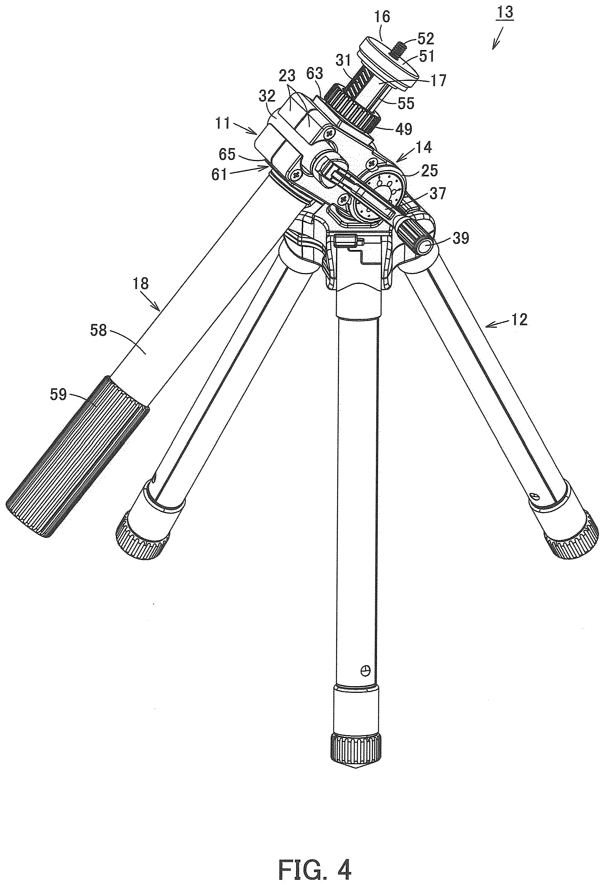

Fig. 1 and Fig. 2 show a support device 11, and Fig. 3 and Fig. 4 show a leg device 13 including the support device 11 positioned on the upper portion of a leg 12. It is desirable that the support device 11 is configured separately from the upper portion of the leg 12 and detachable as a leg adapter, however, the support device may be configured integrally with the upper portion of the leg 12.

As shown in Fig. 1 and Fig. 2, the support device 11 includes an angle adjustment mechanism 14 for angle adjustment attachable to the upper portion of the leg 12, a movable body 15 supported in such a manner that the angle thereof is adjustable by the angle adjustment mechanism 14, a long support body 17 that is held slidably in the longitudinal direction by the movable body 15 and is provided with a supported body mounting portion 16 to which a supported body such as a camera platform or a camera is mounted on the tip end side, and an operation tube 18 for angle adjusting operations that is fitted onto the long support body 17 from the side opposite to the supported body mounting portion 16 of the long support body 17 and connected to the movable body 15.

As shown in Fig. 2, the angle adjustment mechanism 14 is formed so that, to a turning shaft body 21 that has an axis in the vertical direction and is attached separately or integrally to the upper portion of the leg 12, a tilting shaft body 22 that has an axis in the horizontal direction and consists of a plurality of tilting shaft members 22a and 22b so as to sandwich the turning shaft body 21 is fitted turnably, tilting shaft hole portions 25 are formed so as to be reduced in diameter due to slits 24 at offset positions of a pair of holding bodies 23 that hold the movable body 15 from both sides, and the tilting shaft body 22 is fitted turnably in the tilting shaft hole portions 25. The plurality of tilting shaft members 22a and 22b are fixed across the turning shaft body 21 by a pair of screws (not illustrated), and a screw 26 threadedly inserted from one tilting shaft member 22a is engaged with an annular groove 27 of the turning shaft body 21 to prevent the tilting shaft body 22 from coming off.

A rack 31 is formed on the upper surface of the long support body 17, and on the other hand, on the movable body 15, a pinion holding tube portion 32 is formed integrally, and a pinion 33 inserted inside through the movable body 15 is held rotatably by this pinion holding tube portion 32 and meshes with the rack 31.

An annular groove 34 is formed on the shaft portion of the pinion 33, a screw 35 inserted into one side portion inside the pinion holding tube portion 32 from the upper side of the movable body 15 engages with the annular groove 34 and locks the pinion 33 inside the pinion holding tube portion 32. A handle fitting groove 36 is provided on one end of the pinion 33, and in this handle fitting groove 36, one end portion 38 of a crank lever-shaped handle 37 that rotatively operates the pinion 33 is fitted in a foldable manner, and a rotating operation knob 39 is axially fitted rotatably to the other end of the handle 37.

On the side opposite to the handle 37 across the movable body 15, a side stopper 41 that restrains the long support body 17 from moving in the axial direction with respect to the movable body 15 is disposed, and a screw portion 42 of the side stopper 41 is threadedly fitted in a screw hole (not illustrated) provided in the movable body 15, and presses and locks the long support body 17 at an arbitrary sliding position when the screw portion is screwed-in. On the other hand, to the end portion of the long support body 17 onto which the operation tube 18 is fitted, an end stopper 43 that engages with the end portion of the movable body 15 is threadedly fitted, and restrains the long support body 17 from moving beyond the end of meshing between the rack 31 and the pinion 33.

A frictional force applying body 44 in a cylindrical sleeve shape is fitted from the supported body mounting portion 16 side of the long support body 17. This frictional force applying body 44 has a thickness portion 45 capable of being inserted between the long support body 17 and the movable body 15 and a thickness portion 46 incapable of being inserted, which are formed across a tapered surface portion 47, and a slit groove 48 that enables the diameter to change is provided across the entire length. A frictional force adjusting body 49 is fitted to the long support body 17 from the supported body mounting portion 16 side of the long support body 17 and screwed in one screwing groove 50 of the movable body 15 so as to press the frictional force applying body 44. Therefore, as the frictional force adjusting body 49 is screwed in, the frictional force applying body 44 is increasingly pressed into the movable body 15 to apply a great frictional force.

While a head member 51 of the supported body mounting portion 16 of the long support body 17 is threadedly fitted in the threadedly fitting groove inside the end portion of the long support body 17, a screw 52 penetrating through the head member 51 is fixed to the end portion of the long support body 17. To this screw 52, a camera or the like is attached via a camera platform, or a camera is directly attached.

At a portion that can be inserted into the movable body 15 of the frictional force applying body 44, a notched portion 53 that enables the pinion 33 and the rack 31 to mesh with each other is provided, and on one side portion and the other side portion of the frictional force applying body 44, rotation-restraining projections 56 which are fitted in side holes 54 formed in the movable body 15 and slidably fitted in side grooves 55 formed in the axial direction of the long support body 17 are formed integrally, and restrain the long support body 17 from only rotating with respect to the movable body 15.

The operation tube 18 includes an outer tube 58 that is threadedly fitted and connected to the other threadedly fitting groove 57 of the movable body 15, and a grip 59 fitted integrally to the outer tube 58, and an angle fixation mechanism 61 that fixes the angle adjusting function of the angle adjusting mechanism 14 by threadedly advancing the operation tube 18 is provided.

In the angle fixation mechanism 61, on the supported body mounting side relative to the pinion holding tube portion 32 of the movable body 15, one pressing portion 63 having a rotating body surface 62 in a cylindrical surface shape is formed integrally, and to the operation tube side relative to the pinion holding tube portion 32 of the movable body 15, the other pressing portion 65 having a rotating body surface 64 in a cylindrical surface shape is fitted movably, and the rotating body surface 64 of the other pressing portion 65 is configured movably in a direction to approach the one pressing portion 63 according to a threadedly-advancing operation (that is, an operation for fixing the angle adjusting function) of the operation tube 18 threadedly fitted to the movable body 15, and each of the pair of holding bodies 23 that hold the movable body 15 from both sides has a pair of arm portions 66 and 67 formed across a slit 24 and deformable by compression by the rotating body surfaces 62 and 64 of the one pressing portion 63 and the other pressing portion 65.

Each holding body 23 deformed to narrow the slit 24 between the pair of arm portions 66 and 67 by compression by the one pressing portion 63 and the other pressing portion 65 has a function of fixing the angle adj ustment mechanism 14 by reducing the diameters of the tilting shaft hole portions 25 of the angle adjustment mechanism 14. Between the outer tube 58 of the operation tube 18 and the other pressing portion 65, two ring members 68 and 69 are interposed.

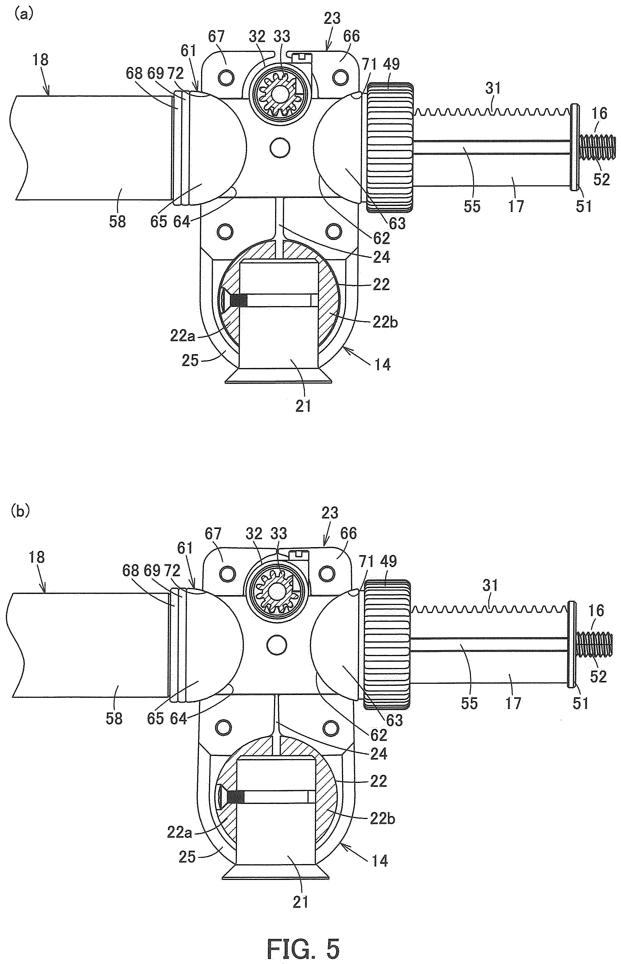

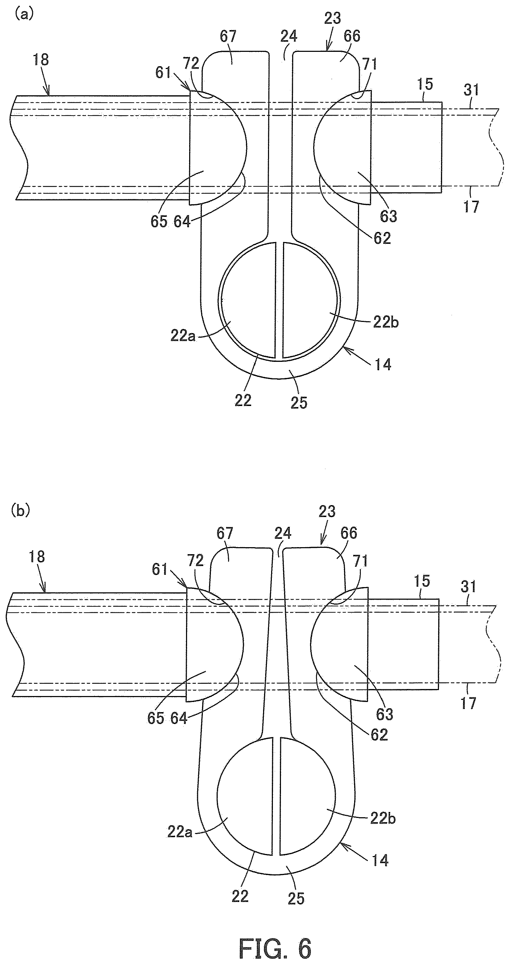

As shown in Fig. 5 and Fig. 6, on one arm portions 66 of the pair of holding bodies 23, concave rotating body surfaces 71 having inverted shapes of the convex rotating body surface 62 of the one pressing portion 63 are formed, and on the other arm portions 67 of the pair of holding bodies 23, concave rotating body surfaces 72 having inverted shapes of the convex rotating body surface 64 of the other pressing portion 65 are formed, and in these concave rotating body surfaces 71 and 72, the rotating body surfaces 62 and 64 of the one and the other pressing portions 63 and 65 are fitted rotatably smoothly.

The rotating body surfaces 62 and 64 are not limited to the illustrated cylindrical surfaces, but may be spherical surfaces, conical surfaces, rotating oval body surfaces (rugby-ball-like surfaces), or contact surfaces having functions equivalent to the functions of the aforementioned surfaces.

As shown in Fig. 2, the pair of holding bodies 23 are fixed by four fixation screws 73 so as to sandwich the movable body 15, and side covers 74 are fitted to the tilting shaft hole portions 25 of the holding bodies 23 to cover the end faces of the tilting shaft body 22. Further, the pair of holding bodies 23 have the slits 74 and hole portions 75 between the pairs of arm portions 66 and 67, and through these hole portions 75, the pinion 33 and the side stopper 41 are inserted into the movable body 15.

Next, operation of the illustrated embodiment is described.

Fig. 3 shows a case where the long support body 17 is used as a raising and lowering offset center pole or center column, and by loosening the side stopper 41 shown in Fig. 2 and rotating the pinion 33 by rotating the handle 37, the long support body 17 on which the rack 31 meshing with this pinion 33 is formed is raised or lowered, and accordingly the height of a camera (not illustrated) mounted to the supported body mounting portion 16 directly or via a camera platform (not illustrated) is adjusted, and the side stopper 41 is tightened to fix rising and lowering of the long support body 17.

Fig. 4 shows a case where the long support body 17 is tilted and used, and by threadedly retreating the operation tube 18 by twisting it counterclockwise from the state shown in Fig. 3, as shown in Fig. 5(a) and Fig. 6(a), the other pressing portion 65 is retreated with respect to the one pressing portion 63 from the fixed state shown in Fig. 5(b) and Fig. 6(b), and the force to compress each of the arm portions 66 and 67 of the pair of holding bodies 23 by the one pressing portion 63 and the other pressing portion 65 is released, and accordingly, the slits 24 between the arm portions 66 and 67 of the pair of holding bodies 23 are deformed to open to expand the diameters of the tilting shaft hole portions 25, so that the holding bodies 23 are enabled to turn around the tilting shaft body 22, and at the same time, the force to compress the turning shaft body 21 by the plurality of tilting shaft members 22a and 22b of the tilting shaft body 22 is also released, so that the tilting shaft body 22 is enabled to turn around the turning shaft body 21, and accordingly, the long support body 17 held by the pair of holding bodies 23 can be freely turned around the tilting shaft and the turning shaft for adjustment with the operation tube 18.

On the other hand, by threadedly advancing the operation tube 18 by twisting it clockwise from the state shown in Fig. 5(a) and Fig. 6(a), as shown in Fig. 5(b) and Fig. 6(b), when the slit 24 between the arm portions 66 and 67 of each holding body 23 is deformed to close by compression by the one pressing portion 63 and the other pressing portion 65, the tilting shaft hole portion 25 of the holding body 23 is reduced in diameter to compress the tilting shaft body 22 as shown in Fig. 5(a) and Fig. 6(b), so that turning around the tilting shaft body 22 is fixed, and at the same time, the plurality of tilting shaft members 22a and 22b of the tilting shaft body 22 also compress the turning shaft body 21, so that turning around the turning shaft body 21 is also fixed, and turning around the tilting shaft and turning around the turning shaft are fixed simultaneously.

As shown in Fig. 6(a) and Fig. 6(b), when performing a fixing operation for fixing the angle adjusting function of the holding bodies 23 by compression by the one pressing portion 63 and the other pressing portion 65, the arm portions 66 and 67 change in angle due to deformation of the tilting shaft hole portions 25 of the holding bodies 23, however, this angle change of the holding bodies 23 is absorbed by rotative slipping movement caused between the rotating body surfaces 62 and 64 of the one pressing portion 63 and the other pressing portion 65 and the rotating body surfaces 71 and 72 of the arm portions 66 and 67, and the one pressing portion 63 and the other pressing portion 65 approach each other without angle changes, so that the long support body 17 penetrating through these pressing portions 63 and 65 does not change in angle at the time of the fixing operation.

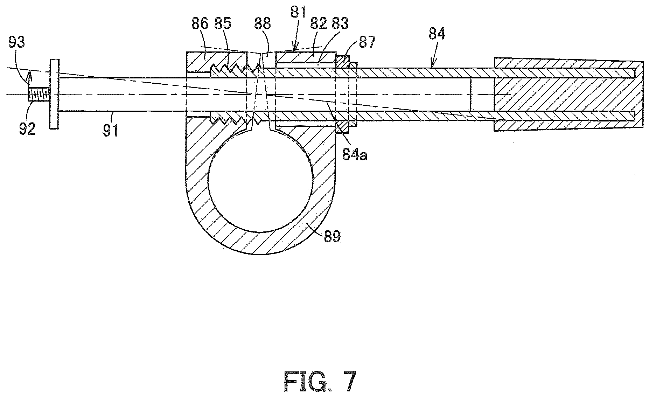

On the other hand, Fig. 7 shows a comparative example for describing a problem occurring at the time of the operation for fixing the angle adjusting function, and when a tip end screw portion 85 of the operation tube 84 loosely fitted in a hole 83 provided in one arm portion 82 of the holding body 81 is threadedly fitted in a screw hole provided in the other arm portion 86 of the holding body 81, a stopper 87 locked on a part of the operation tube 84 is engaged with one arm portion 82 of the holding body 81, and then, the operation tube 84 is twisted to compress the slit 88 between the one arm portion 82 and the other arm portion 86 of the holding body 81 in a direction to close the slit to reduce the diameter of the tilting shaft hole portion 89 of the holding body 81 and deform it, both arm portions 82 and 86 of the holding body 81 incline while being deformed as shown by the alternate long and two short dashed lines, so that the axis 84a of the operation tube 84 threadedly fitted in the screw hole of the arm portion 86 changes in angle as shown by the alternate long and short dashed lines in FIG. 7, and the long support body 91 fitted to the operation tube 84 also changes in angle, and the supported body mounting portion 92 on the tip end of the long support body may erroneously turn upward as shown by the arrow 93.

Next, effects of the illustrated embodiment are described.

Even when the position of the supported body mounting portion 16 is changed by sliding the long support body 17 in the axial direction with respect to the movable body 15 that is adjusted in angle by the angle adjustment mechanism 14, the operation tube 18 that is fitted onto the long support body 17 from the side opposite to the supported body mounting portion 16 and connected to the movable body 15 does not need to be changed in position to be grasped, so that the long support body 17 can be easily adjusted in angle in a desired arbitrary direction with the operation tube 18 via the movable body 15, and the operability is improved.

An angle change caused by deformation of the holding body 23 when a fixing operation for fixing the angle adjustment mechanism 14 is performed by the angle fixation mechanism 61 is absorbed by rotating body surfaces 62 and 64 of the one pressing portion 63 and the other pressing portion 65, and the one pressing portion 63 and the other pressing portion 65 approach each other without angle changes, so that the long support body 17 can be prevented from changing in angle like the long support body 91 shown in Fig. 7 at the time of the fixing operation, and erroneous operation of the long support body 17 that easily occurs at the time of the fixing operation for fixing the angle fixation mechanism 61 is prevented, and accurate operations are easily realized.

The long support body 17 is adjusted in angle with the angle adjustment mechanism 14 by moving the operation tube 18, and by twisting the operation tube 18 after the angle adjustment, the angle fixation mechanism 61 is actuated to fix the angle adjusting function of the angle adjustment mechanism 14, so that the angle of the long support body 17 can be easily fixed, and the operability is further improved.

By twisting the operation tube 18, when the holding bodies 23 are deformed by compression by the one pressing portion 63 and the other pressing portion 65 to fix the angle adjustment mechanism 14, the tilting shaft hole portions 25 of the holding bodies 23 are reduced in diameter to compress the tilting shaft body 22, and accordingly, turning around the tilting shaft body 22 can be fixed, and the turning shaft body 21 is also compressed by the tilting shaft body 22 consisting of the plurality of tilting shaft members 22a and 22b fitted turnably to the turning shaft body 21 so as to sandwich the turning shaft body 21, so that turning around the turning shaft body 21 can also be fixed simultaneously, and therefore, fixation around the tilting shaft and fixation around the turning shaft are realized simultaneously, and the operability is further improved.

The long support body 17 can be easily moved with respect to the movable body 15 by rotating the pinion 33 meshing with the rack 31 of the long support body 17 by the handle 37, so that the operability can be improved to be higher than in the case where the long support body 17 is directly grasped and moved in the axial direction.

An appropriate frictional force is applied to the long support body 17 by the frictional force applying body 44 properly pressed and adjusted by the frictional force adjusting body 49 threadedly fitted to the movable body 15, so that the long support body 17 can be smoothly moved while unstable movement due to a clearance or the like between the movable body 15 and the long support body 17 is prevented, and in this regard, the operability is improved.

In the support device 11 attached onto the leg 12, even when the position of a supported body such as a camera platform or a camera is changed by sliding the long support body 17 with respect to the movable body 15, the position to be grasped of the operation tube 18 does not change, so that the long support body 17 can be easily adjusted in angle in a predetermined direction with the operation tube 18 via the movable body 15, and therefore, a leg device 13 with excellent operability can be provided.

The support device 11 according to the present invention is applicable not only to a tripod for a camera but also to a tripod that supports a telescope or a surveying tool, and the leg device 13 according to the present invention is applicable not only to a tripod but also to a monopod.

### Industrial Applicability

The present invention is available to those who manufacture and sell the support device 11 and the leg device 13 as a business.

### REFERENCE SIGNS LIST

- 11: Support device
- 12: Leg
- 13: Leg device
- 14: Angle adjustment mechanism
- 15: Movable body
- 16: Supported body mounting portion
- 17: Long support body
- 18: Operation tube
- 21: Turning shaft body
- 22: Tilting shaft body
- 22a, 22b: Tilting shaft member
- 23: Holding body
- 25: Tilting shaft hole portion
- 31: Rack
- 33: Pinion
- 37: Handle
- 44: Frictional force applying body
- 47: Tapered surface portion
- 61: Angle fixation mechanism
- 62: Rotating body surface
- 63: One pressing portion
- 64: Rotating body surface
- 65: Other pressing portion

## Claims

1. A support device (11) comprising:
an angle adjustment mechanism (14) for angle adjustment, comprising a turning shaft body (21) that has an axis in the vertical direction and is attached to an upper portion of a leg (12), a tilting shaft body (22) that has an axis in the horizontal direction and is fitted turnably to the turning shaft body (21), and a pair of holding bodies (23) that are fitted turnably to the tilting shaft body (22) ;
a movable body (15) sandwiched and held from the outside by the pair of holding bodies (23), supported in such a manner that the angle thereof is adjustable with respect to the upper portion of the leg (12) around the turning shaft body (21), and supported in such a manner that the angle thereof is adjustable with respect to the upper portion of the leg (12) around the tilting shaft body (22) of the angle adjustment mechanism (14);
a long support body (17) that is an axial member held slidably in the longitudinal direction being an axial direction by an inner circumferential surface of the movable body (15) and provided with a supported body mounting portion (16) to which a supported body is mounted on one end of the axial member; and
an operation tube (18) for angle adjusting operations fitted onto the long support body (17) from the other end opposite to the end of the axial member to which the supported body mounting portion (16) of the long support body (17) is mounted and connected to the movable body (15).

2. The support device (11) according to Claim 1, comprising:
an angle fixation mechanism (61) that fixes the angle adjusting function of the angle adjustment mechanism (14), wherein
the angle fixation mechanism (61) comprising:
one pressing portion (63) that has a rotating body surface (62) formed integrally with the movable body (15);
the other pressing portion (65) that is fitted movably to the movable body (15) and has a rotating body surface (64) movable in a direction to approach the one pressing portion (63) according to an operation for fixing the angle adjusting function; and
a holding body (23) that holds the movable body (15), and fixes the angle adjustment mechanism (14) when the holding body (23) is compressed and deformed by the rotating body surfaces (62, 64) of the one pressing portion (63) and the other pressing portion (65).

3. The support device (11) according to Claim 2, wherein
the operation tube (18) is threadedly fitted and connected to the movable body (15), and
the angle fixation mechanism (61) fixes the angle adjusting function of the angle adjustment mechanism (14) by threadedly advancing the operation tube (18).

4. The support device (11) according to Claim 2 or 3, wherein
the angle adjustment mechanism (14) comprising:
a turning shaft body (21) to be attached to the upper portion of the leg (12);
a tilting shaft body (22) consisting of a plurality of tilting shaft members (22a, 22b) fitted turnably to the turning shaft body (21) so as to sandwich the turning shaft body (21); and
a tilting shaft hole portion (25) that is formed to be capable of being reduced in diameter in the holding body (23) by compression by the one pressing portion (63) and the other pressing portion (65) and fitted turnably to the tilting shaft body (22).

5. The support device (11) according to any of Claims 1 to 4, comprising:
a rack (31) formed on the long support body (17);
a pinion (33) that is inserted inside through the movable body (15) and made mesh with the rack (31); and
a handle (37) for rotatively operating the pinion (33).

6. The support device (11) according to any of Claims 1 to 5, comprising:
a tubular frictional force applying body (44) having a thickness capable of being inserted between the long support body (17) and the movable body (15) from the supported body mounting portion (16) side of the long support body (17) and a thickness incapable of being inserted which are formed across a tapered surface portion (47); and
a frictional force adjusting body (49) that is fitted to the long support body (17) from the supported body mounting portion (16) side of the long support body (17) and threadedly fitted to the movable body (15), and is capable of pressing the frictional force applying body (44).

7. A leg device (13) comprising:
a leg (12); and
the support device (11) according to any of Claims 1 to 6 positioned on an upper portion of the leg.

## Patentansprüche

1. Stützvorrichtung (11), umfassend:
einen Winkeleinstellmechanismus (14) zum Winkeleinstellen, umfassend einen drehenden Wellenkörper (21), der eine Achse in der vertikalen Richtung hat und an einem oberen Teil eines Beins (12) angebracht ist, einen kippenden Wellenkörper (22), der eine Achse in der horizontalen Richtung hat und drehbar an dem drehenden Wellenkörper (21) angebracht ist, und ein Paar Haltekörper (23), die drehbar an dem kippenden Wellenkörper (22) angebracht sind;
einen beweglichen Körper (15), der zwischen dem Paar Haltekörper (23) eingelegt ist und von der Außenseite von ihm gehalten wird, abgestützt in einer solchen Weise, dass der Winkel davon mit Bezug auf den oberen Teil des Beins (12) rings um den drehenden Wellenkörper (21) einstellbar ist, und in einer solchen Weise abgestützt, dass der Winkel davon in Bezug auf den oberen Teil des Beins (12) rings um den kippenden Wellenkörper (22) des Winkeleinstellmechanismus (14) einstellbar ist;
einen langen Stützkörper (17), der ein axiales Element ist, das von einer Innenumfangsoberfläche des beweglichen Körpers (15) verschiebbar in der Längsrichtung, die eine axiale Richtung ist, gehalten wird, und mit einem abgestützten Körpermontageteil (16) ausgestattet ist, an dem an einem Ende des axialen Elements ein abgestützter Körper montiert ist; und
ein Operationsrohr (18) für Winkeleinstelloperationen, angebracht auf dem langen Stützkörper (17) vom anderen Ende, gegenüber dem Ende des axialen Elements, an dem das abgestützte Körpermontageteil (16) des langen Stützkörpers (17) angebracht und mit dem beweglichen Körper (15) verbunden ist.

2. Stützvorrichtung (11) nach Anspruch 1, umfassend:
einen Winkelfixiermechanismus (61), der die Winkeleinstellfunktion des Winkeleinstellmechanismus (14) fixiert, wobei
der Winkelfixiermechanismus (61) Folgendes umfasst:
einen pressenden Teil (63), der eine rotierende Körperoberfläche (62) hat, die integral mit dem beweglichen Körper (15) ausgeformt ist;
den anderen pressenden Teil (65), der beweglich am beweglichen Körper (15) angebracht ist und eine rotierende Körperoberfläche (64) hat, die in einer Richtung beweglich ist, um sich dem einen pressenden Teil (63) entsprechend einer Operation zum Fixieren der Winkeleinstellfunktion anzunähern; und
einen Haltekörper (23), der den beweglichen Körper (15) hält und den Winkeleinstellmechanismus (14) fixiert, wenn der Haltekörper (23) von den rotierenden Körperoberflächen (62, 64) des einen pressenden Teils (63) und des anderen pressenden Teils (65) komprimiert und deformiert wird.

3. Stützvorrichtung (11) nach Anspruch 2, wobei
das Operationsrohr (18) mittels Gewinde an dem beweglichen Körper (15) angebracht und mit ihm verbunden ist, und
der Winkelfixiermechanismus (61) die Winkeleinstellfunktion des Winkeleinstellmechanismus (14) durch Vorschieben des Operationsrohres (18) mittels Gewinde fixiert.

4. Stützvorrichtung (11) nach Anspruch 2 oder 3, wobei der Winkeleinstellmechanismus (14) Folgendes umfasst:
einen drehenden Wellenkörper (21), der am oberen Teil des Beins (12) anzubringen ist;
einen kippenden Wellenkörper (22), bestehend aus mehreren kippenden Wellenelementen (22a, 22b), die drehbar am drehenden Wellenkörper (21) angebracht sind, sodass der drehende Wellenkörper (21) zwischen ihnen eingelegt ist; und
einen Lochteil (25) der kippenden Welle, der so geformt ist, dass er im Durchmesser im Haltekörper (23) durch Kompression durch den einen pressenden Teil (63) und den anderen pressenden Teil (65) reduziert und drehbar an dem kippenden Wellenkörper (22) angebracht werden kann.

5. Stützvorrichtung (11) nach einem der Ansprüche 1 bis 4, umfassend:
eine Zahnstange (31), die an dem langen Stützkörper (17) ausgeformt ist;
ein Ritzel (33), das durch den beweglichen Körper (15) innen eingeführt und mit der Zahnstange (31) in Eingriff gebracht wurde; und
einen Griff (37) zum drehenden Operieren des Ritzels (33).

6. Stützvorrichtung (11) nach einem der Ansprüche 1 bis 5, umfassend:
einen rohrförmigen, eine Reibungskraft anwendenden Körper (44), der eine Dicke hat, die es ermöglicht, dass er von der dem abgestützten Körpermontageteil (16) des langen Stützkörpers (17) zugewandten Seite aus zwischen den langen Stützkörper (17) und den beweglichen Körper (15) eingeführt werden kann, und der eine Dicke hat, die dort nicht eingeführt werden kann, wobei die Dicken über einen sich verjüngenden Oberflächenabschnitt (47) ausgeformt sind; und
einen eine Reibungskraft einstellenden Körper (49), der an dem langen Stützkörper (17) von der dem abgestützten Körpermontageteil (16) des langen Stützkörpers (17) zugewandten Seite aus angebracht ist und mittels Gewinde an dem beweglichen Körper (15) angebracht und fähig ist, den eine Reibungskraft anwendenden Körper (44) zu pressen.

7. Beinvorrichtung (13), die Folgendes umfasst:
ein Bein (12); und
die Stützvorrichtung (11) nach einem der Ansprüche 1 bis 6, positioniert an einem oberen Teil des Beins.

## Revendications

1. Dispositif de support (11) comprenant :
un mécanisme d'ajustement d'angle (14) pour un ajustement d'angle, comprenant un corps d'arbre tournant (21) qui a un axe dans la direction verticale et est fixé à une partie supérieure d'un pied (12), un corps d'arbre d'inclinaison (22) qui a un axe dans la direction horizontale et est monté avec possibilité de rotation sur le corps d'axe tournant (21), et une paire de corps de maintien (23) qui sont montés avec possibilité de rotation sur le corps d'arbre d'inclinaison (22) ;
un corps mobile (15) entouré ou pris en sandwich et maintenu par rapport à l'extérieur par la paire de corps de maintien (23), supporté d'une manière telle que son angle soit ajustable par rapport à la partie supérieure du pied (12) autour du corps d'arbre tournant (21), et supporté d'une manière telle que son angle soit ajustable par rapport à la partie supérieure du pied (12) autour du corps d'arbre d'inclinaison (22) du mécanisme d'ajustement d'angle (14) ;
un corps de support long (17) qui est un élément axial maintenu avec possibilité de coulissement dans la direction longitudinale qui est une direction axiale par une surface circonférentielle intérieure du corps mobile (15) et doté d'une partie de montage de corps supporté (16) sur laquelle un corps supporté est monté sur une extrémité de l'élément axial ; et
un tube d'actionnement (18) pour des opérations d'ajustement d'angle monté sur le corps de support long (17) à partir de l'autre extrémité opposée par rapport à l'extrémité de l'élément axial sur laquelle la partie de montage de corps supporté (16) du corps de support long (17) est montée et connectée au corps mobile (15).

2. Dispositif de support (11) selon la revendication 1, comprenant :
un mécanisme de fixation d'angle (61) qui fixe la fonction d'ajustement d'angle du mécanisme d'ajustement d'angle (14), dans lequel
le mécanisme de fixation d'angle (61) comprend :
une partie de pression (63) qui a une surface de corps rotative (62) formée de manière solidaire avec le corps mobile (15) ;
l'autre partie de pression (65) qui est montée avec possibilité de déplacement sur le corps mobile (15) et a une surface de corps rotative (64) mobile dans une direction pour s'approcher de l'une partie de pression (63) en fonction d'une opération pour fixer la fonction d'ajustement d'angle ; et
un corps de maintien (23) qui maintient le corps mobile (15), et fixe le mécanisme d'ajustement d'angle (14) lorsque le corps de maintien (23) est compressé et déformé par les surfaces de corps rotatives (62, 64) de la première partie de pression (63) et de l'autre partie de pression (65).

3. Dispositif de support (11) selon la revendication 2, dans lequel
le tube d'actionnement (18) est monté par vissage et connecté au corps mobile (15), et
le mécanisme de fixation d'angle (61) fixe la fonction d'ajustement d'angle du mécanisme d'ajustement d'angle (14) en faisant avancer par vissage le tube d'actionnement (18).

4. Dispositif de support (11) selon la revendication 2 ou 3, dans lequel le mécanisme d'ajustement d'angle (14) comprend :
un corps d'arbre tournant (21) devant être fixé à la partie supérieure du pied (12) ;
un corps d'arbre d'inclinaison (22) consistant en une pluralité d'éléments d'arbres d'inclinaison (22a, 22b) montés avec possibilité de rotation sur le corps d'arbre tournant (21) de manière à entourer ou prendre en sandwich le corps d'arbre tournant (21) ; et
une partie de trou d'arbre d'inclinaison (25) qui est formée pour être capable d'être d'un diamètre réduit dans le corps de maintien (23) par compression de l'une partie de pression (63) et de l'autre partie de pression (65) et montée avec possibilité de rotation sur le corps d'arbre d'inclinaison (22).

5. Dispositif de support (11) selon l'une quelconque des revendications 1 à 4, comprenant :
une crémaillère (31) formée sur le corps de support long (17) ;
un pignon (33) qui est inséré à l'intérieur du corps mobile (15) et amené à s'engrener avec la crémaillère (31) ; et
une poignée (37) pour actionner en rotation le pignon (33).

6. Dispositif de support (11) selon l'une quelconque des revendications 1 à 5, comprenant :
un corps d'application de force de frottement tubulaire (44) ayant une épaisseur capable d'être insérée entre le corps de support long (17) et le corps mobile (15) à partir du côté de la partie de montage de corps supporté (16) du corps de support long (17) et une épaisseur incapable d'être insérée qui sont formées sur une partie de surface inclinée (47) ; et
un corps d'ajustement de force de frottement (49) qui est monté sur le corps de support long (17) à partir du côté de la partie de montage de corps supporté (16) du corps de support long (17) et monté par vissage sur le corps mobile (15), et est capable d'une pression sur le corps d'application de force de frottement (44).

7. Dispositif de pied (13) comprenant :
un pied (12) ; et
le dispositif de support (11) selon l'une quelconque des revendications 1 à 6 positionné sur une partie supérieure du pied.
